# EUROPEAN PATENT SPECIFICATION

(11) **EP 0 776 686 B1**
(45) Date of publication and mention of the grant of the patent: **16.01.2002**
(21) Application number: 96308598.0
(22) Date of filing: 28.11.1996
(51) Int. Cl.: B01D 45/16, B01D 45/12, B01D 21/26, B04C 5/26, B04C 3/04

(54) **Multi-stage gas/solids separator and process**
Vielstufige Gas/Feststofftrennvorrichtung und Verfahren
Séparateur gaz/solides à plusieurs étappes et procédé

(30) Priority: 01.12.1995 US 565752
(43) Date of publication of application: 04.06.1997
(73) Proprietor: ExxonMobil Research and Engineering Company, Annandale, New Jersey 08801 (US)
(72) Inventor: Tammera, Robert Frank, West Orange, New Jersey (US)
(74) Representative: Dew, Melvyn John

(56) References cited:
- EP-A- 0 284 675
- WO-A-81/01110
- DE-A- 3 043 729
- FR-A- 2 558 741
- GB-A- 2 055 310
- GB-A- 2 128 905

## Description

The present invention relates to improvements in the solids separation systems and more particularly to systems which include separation zones staged for improved separation efficiency.

### BACKGROUND OF THE INVENTION

There are a number of commercial fluid solid processes which require removal of particulates from effluent gas streams. The fluidized catalytic cracking of petroleum feed stocks is an example of such a process. Fluidized catalytic cracking units employ both a reactor vessel and a catalyst regenerator vessel each of which includes cyclones for the recovery of catalyst particulates from the gases that are removed from these vessels.

Experience has shown that use of at least two cyclones arranged in series is more efficient in meeting today's particulate recovery requirements. Consequently, it is quite typical to use a plurality of primary and secondary cyclone separators in fluid catalytic cracking vessels. Arranging the required number of primary and secondary cyclones within a reactor vessel, however, has placed significant pressures on space utilization within the vessel. As is well known various vessel internals impede the most efficient placing of these cyclones. Additionally, today's reactive catalysts and significantly higher operating temperatures promoting rapid conversion of the petroleum feedstock necessitates rapid and efficient separation of the catalyst from the gaseous stream to avoid or at least minimize undesirable reactions from occurring.

Thus there remains a need for an improved method for separating entrained solid materials from a gas streams. One object of the present invention is to meet that need.

Another object of the present invention is to provide a multi-staged fluid solids separation system that has improved efficiency.

It is another object of the present invention to provide a staged fluid solids separation system which can be mounted horizontally or vertically.

These and other objects of the present invention will become apparent upon a reading of the detailed description of the invention in conjunction with the drawings.

In one aspect, the present invention provides a method for separating fluid-entrained solids in accordance with claim 1.

In another aspect, the present invention provides a multi-stage gas/solids separator in accordance with claim 5.

Very simply, in accordance with the general principles of the present invention, a gas solids stream is separated with enhanced efficiency by spirally and serially passing the gas solid stream through at least two aligned separation zones, the direction of the spiral of the gas solid stream being the same in all separation zones whereby centrifugal forces cause the solids in each zone to move outwardly to solids outlet(s) for removal while gas passes through a low pressure central region for removal via a gas outlet.

### BRIEF DESCRIPTION OF THE DRAWINGS

Figure 1 is a schematic view partly in perspective and partly cut-away showing an embodiment of the present invention in which the separation system is horizontally oriented.
Figure 2 is a schematic diagram showing an embodiment of the separation system of the present invention oriented vertically.
Figure 3 is a plan view of the embodiment shown in Figure 2 showing the offset arrangement of the gas outlets.
Figure 4 is a schematic illustration, partly cut away, of an embodiment of the present invention having more than two stages.
Figure 5 is a schematic view, partly cut away, of an embodiment of the separation system of the invention oriented vertically.

### DETAILED DESCRIPTION OF THE INVENTION

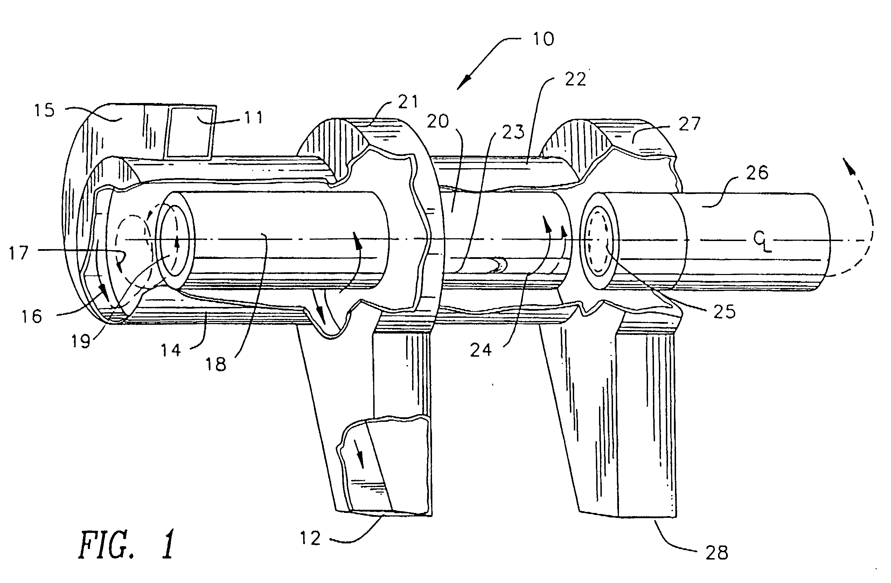

In Figure 1, a horizontally oriented separation system 10 of one embodiment of the present invention is illustrated. As shown in Figure 1, the unitary apparatus 10 consists of a first stage having a gas solids inlet 11 and a solids outlet 12. The main body 14 of the first stage is generally cylindrical in shape and has a closed first end 15. The gas solids inlet 11 that communicates with a tangential opening in body 14 for introducing flow of gas/solids to be separated in a rotational swirling pattern with the more dense solid material shown by arrows 16 moving outwardly due to the centrifugal forces and the less dense, generally gaseous material represented by arrows 17 moving toward the central direction of the lower pressure center of the apparatus. Concentric with the main body of 14 of the first stage of the device is an interstage transfer pipe 18. As can be seen the interstage pipe 18 is open at its first end 19 and is in communication with the interstage transfer pipe member 20 in the second stage of the apparatus.

The first stage of the apparatus includes a solids outlet 12 which communicates with a solids deacceleration zone 21 which is generally cylindrical in shape and has a diameter greater than that of the diameter of the body portion 14.

The second stage of the separation device 10 is axially aligned with the first stage. The second stage has a cylindrical body portion 22 of the same diameter as that of body portion 14 of the first stage. Also, as indicated previously, the second stage includes a section of interstage transfer pipe 20 which is in communication with the interstage pipe member 18 of the first stage. The interstage transfer pipe 20 of the second stage is closed at its distal end; however, it has a tangential opening 23 in its cylindrial wall from which the spirally rotating, less dense phase removed from the first stage continues its progress through the second stage, with the remaining solid particles represented by arrows 24 moving outwardly because of the centrifugal force, and the gas represented by the arrows 25 progressing into the axially aligned gas outlet conduit 26. The second stage of the apparatus 10 includes a solids disengaging zone 27 which is similar to zone 21 in the first stage. Specifically, it has a generally circular cross-section with a diameter greater than that of the diameter of the body portion 22. Solids disengaging zone 27 is provided with a solids outlet 28.

As is shown in Figure 1, a gas solids mixture is fed tangentially into the first stage of the apparatus 10 and is given a swirling directional motion which because of the centrifugal force causes the more dense material to move outwardly and progress toward the disengaging zone 21 while the less dense material travels through the interstage transfer device 18 and 20. The solids that progress through 21 because of the larger diameter of that region of the device then deaccelerate and are removed via solids outlet 12.

With the device of the present invention a substantial quantity of solids is removed from a gas stream. For example, typically better than 80% of the solids in the gas/solids stream will be removed and up to 99% of the solids will be removed in the first stage. Gas with the remaining entrained solids that progresses through the apparatus 10 continues in the same rotational direction as it proceeds through the interstage transfer tube 18 and 20 and is tangentially emitted from transfer tube 20 through the tangential orifice 23. Because of the centrifugal forces, the heavier solids material moves outwardly and proceeds toward the disengaging zone 27 for removal of the solids via the solids outlet 28, while the less dense gas moves generally centrally through the device through the gas outlet pipe 26.

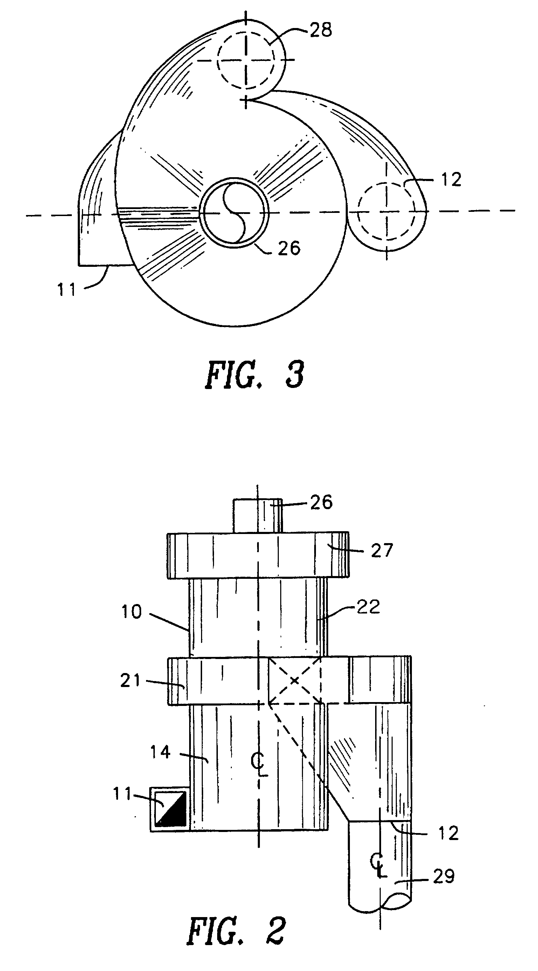

Turning now to Figure 2 the device 10 of the present invention is shown having two stages, a lower first stage and an upper second stage which are vertically oriented but in axial alignment. In the embodiment shown in Figure 2, the solids outlet 12 is shown communicating with a conduit 29. Also, in the embodiment in Figure 2, the first stage and second stage solids outlets are offset radially to provide clearance for conduits for delivery of solids removed from the device. This offsetting can be seen better in Figure 3 in which the first and second stage solids outlets 12 and 28 are shown.

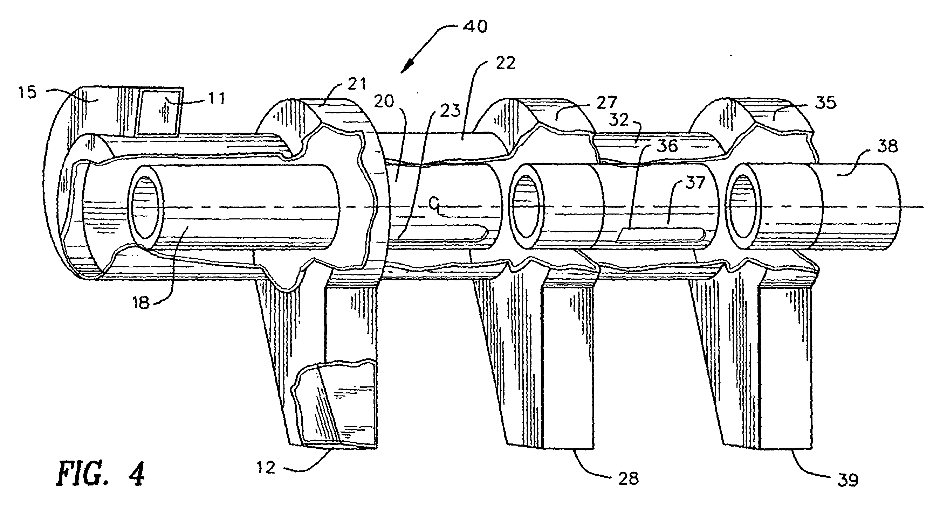

In the schematic embodiment of Figure 4, there is shown a unitary apparatus 40 of the present invention having three stages. For brevity the previously described reference numerals used in connection with Figure 1 remain unchanged and will not be elaborated upon. In any event as can be seen, in this arrangement a second stage communicates with a third stage via a interstage transfer pipe 36 which is open at its first end and closed at its second end and has a tangential slot 37 in the side thereof. The third stage has a cylindrical body portion 32 of the same diameter as that of body portions 14 and 22. The third stage as shown is axially aligned with the first and the second stage. The third stage includes a solids disengaging zone 35 which is similar to zones 27 and 21. A gas outlet conduit 38 is axially aligned with member 36; and a solids outlet 39 similar to that of 12 and 28 is provided.

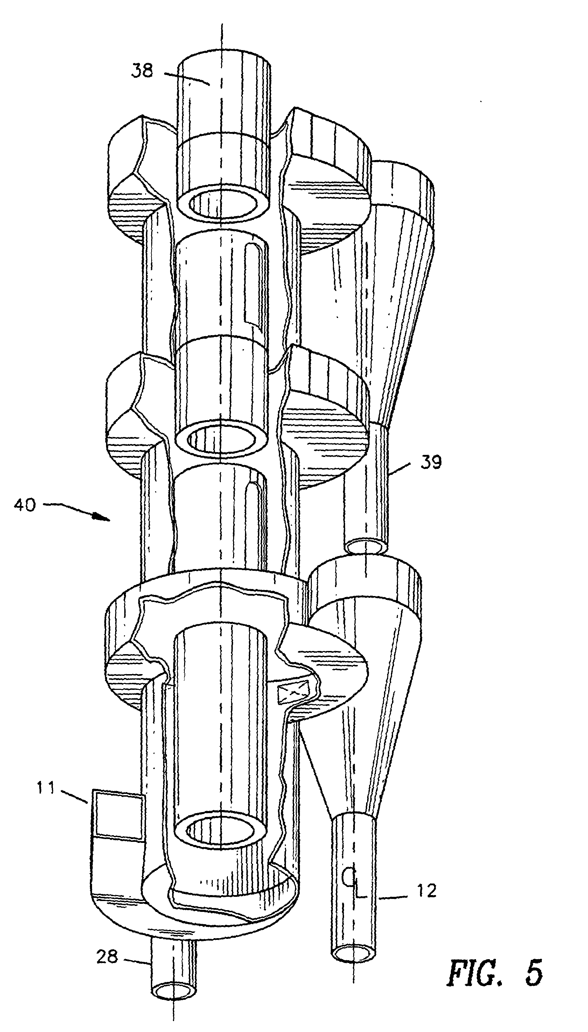

The embodiment of Figure 5 depicts a three stage unitary separation device vertically oriented with solids outlets 12, 28 and 39 radially offset thereby providing greater flexibility for the placing of the device in a gas solids reaction vessel.

## Claims

1. A method for separating fluid-entrained solids comprising:
tangentially introducing a stream of fluid-entrained solids in the first of a plurality of axially-aligned cylindrical separation zones whereby the resulting centrifugal forces cause a more dense phase of the stream in the first zone to move outwardly and a less dense phase of the stream in the first zone to move centrally;
axially discharging the less dense phase of the stream from the first and each succeeding zone, and introducing the axially-discharged stream into the next succeeding zone whereby the rotational direction of the stream entering each zone is the same and the resulting centrifugal forces cause a more dense phase of the stream in each zone to move outwardly and a less dense phase to move centrally;
tangentially discharging the more dense phase from each zone whereby the solids are separated from the fluid, **characterized in that** the axially-discharched stream is introduced tangentially into the next succeeding zone.

2. The method of claim 1 wherein the fluid is centrally removed from the last of the plurality of the axially-aligned zones.

3. The method of claim 1 or claim 2 wherein the stream is passed through two axially-aligned cylindrical separation zones.

4. The method of any one of claims 1 to 3 wherein the fluid is a gas.

5. A multi stage gas/solids separator comprising:
at least a first stage and a second stage, each having a main body portion (14,22) the main body portion of each stage being generally cylindrical in shape and having a first end and a second end; the main body portion of the first stage having a closed first end (15) and a tangential opening near the first end for introducing a fluid/solids stream for separation in the separator and imparting a swirling motion thereto; a generally cylindrical interstage transfer tube (18) having a first end and a second end, said tube being concentrically located within the main body of each stage; the interstage transfer tube in the first stage being open at its first end and its second end being in communication with the first end of the interstage tube in the second stage, the interstage transfer tube in the second stage being closed at its second end and having a tangentially oriented circumferential opening (23) near the second end; a generally cylindrical, concentric solids-disengaging zone (21,27) surrounding each of the main body portions of the first and second stages at their second ends, each disengaging zone having an opening (12,28) therein for removal of solids therefrom; and a fluid outlet (26) located at the second end of the separator.

6. The separator of claim 5 comprising a third stage having a generally cylindrical main body portion (32), the third stage having an interstage transfer tube; the interstage transfer tube of the third stage having a first end and a closed second end; the first end of the third stage interstage transfer tube being in communication with the second stage; the third stage having a tangentially oriented circumferential opening (37) near the second end; and a generally cylindrical concentric solids disengaging zone (35) surrounding the third stage, the disengaging zone having an opening (39) therein for removal of solids from the separator.

7. The separator of claim 5 or claim 6 wherein the stages are in the form of a unitary apparatus.

## Patentansprüche

1. Verfahren zum Abtrennen von durch Fluid mitgerissenen Feststoffen, bei dem
Strom aus von Fluid mitgerissenen Feststoffen tangential in die erste einer Vielzahl von axial angeordneten zylindrischen Trennzonen eingebracht wird, wodurch die resultierenden Zentrifugalkräfte dazu führen, dass sich eine dichtere Phase des Stroms in der ersten Zone auswärts bewegt und eine weniger dichte Phase des Stroms in der ersten Zone zur Mitte hin bewegt,
die weniger dichte Phase des Stroms aus der ersten und jeder nachfolgenden Zone axial abgezogen wird, und der axial abgezogene Strom in die nächste nachfolgende Zone eingebracht wird, wobei die Drehrichtung des in jede Zone eintretenden Stroms gleich ist und die resultierenden Zentrifugalkräfte dazu führen, dass sich eine dichtere Phase des Stroms in jeder Zone auswärts bewegt und eine weniger dichte Phase zur Mitte hin bewegt,
die dichtere Phase aus jeder Zone tangential abgezogen wird, wodurch die Feststoffe von dem Fluid getrennt werden, **dadurch gekennzeichnet, dass** der axial abgezogene Strom tangential in die nächste nachfolgende Zone eingebracht wird.

2. Verfahren nach Anspruch 1, bei dem das Fluid zentral aus der letzten der Vielzahl der axial angeordneten Zonen entfernt wird.

3. Verfahren nach Anspruch 1 oder Anspruch 2, bei dem der Strom durch zwei axial angeordnete zylindrische Trennzonen geleitet wird.

4. Verfahren nach einem der Ansprüche 1 bis 3, bei dem das Fluid ein Gas ist.

5. Mehrstufiger Gas/Feststoff-Abscheider, der
mindestens eine erste Stufe und eine zweite Stufe, wobei jede einen Hauptkörperabschnitt (14, 22) aufweist, wobei der Hauptkörperabschnitt jeder Stufe von im Allgemeinen zylindrischer Form ist und ein erstes Ende und ein zweites Ende aufweist, wobei der Hauptkörperabschnitt der ersten Stufe ein geschlossenes erstes Ende (15) und eine tangentiale Öffnung nahe dem ersten Ende aufweist, um einen Fluid/Feststoff-Strom zur Trennung in den Abscheider einzubringen und diesem eine Wirbelbewegung zu verleihen, ein im Allgemeinen zylindrisches Zwischenstufen-Überführungsrohr (18) mit einem ersten Ende und einem zweiten Ende, wobei das Rohr konzentrisch innerhalb des Hauptkörpers jeder Stufe angeordnet ist, wobei das Zwischenstufen-Überführungsrohr in der ersten Stufe an seinem ersten Ende offen und an seinem zweiten Ende in,Verbindung mit dem ersten Ende des Zwischenstufenrohrs der zweiten Stufe ist, wobei das Zwischenstufen-Überführungsrohr der zweiten Stufe an seinem zweiten Ende geschlossen ist und eine tangential ausgerichtete Umkreisöffnung (23) nahe dem zweiten Ende aufweist, eine im Allgemeinen zylindrische, konzentrische Feststofftrennzone (21, 27), die jeden der Hauptkörperabschnitte der ersten und zweiten Stufen an ihren zweiten Enden umgibt, wobei jede Trennzone eine Öffnung (12, 28) zur Entfernung von Feststoffen aus derselben aufweist, und einen am zweiten Ende des Abscheiders angeordneten Fluidauslass (26) umfasst.

6. Abscheider nach Anspruch 5, der eine dritte Stufe mit im Allgemeinen zylindrischem Hauptkörperabschnitt (32) aufweist, wobei die dritte Stufe ein Zwischenstufen-Überführungsrohr aufweist, wobei das Zwischenstufen-Überführungsrohr der dritten Stufe ein erstes Ende und ein geschlossenes zweites Ende aufweist, wobei das erste Ende des Zwischenstufen-Überführungsrohrs der dritten Stufe mit der zweiten Stufe verbunden ist, die dritte Stufe eine tangential orientierte kreisförmige Öffnung (37) nahe dem zweiten Ende aufweist und eine im Allgemeinen zylindrische konzentrische Feststoffabtrennzone (35) die dritte Stufe umgibt, wobei die Trennzone eine Öffnung (39) zur Entfernung von Feststoffen aus dem Abscheider aufweist.

7. Abscheider nach Anspruch 5 oder Anspruch 6, bei dem die Stufen in Form eines einteiligen Geräts vorliegen.

## Revendications

1. Procédé de séparation de solides entraînés par un fluide, comprenant les étapes consistant :
à introduire tangentiellement un flux de solides entraîné par un fluide dans la première d'une pluralité de zones de séparation cylindriques alignées axialement, de sorte que les forces centrifuges obtenues amènent une phase plus dense du flux de la première zone à se déplacer vers l'extérieur et une phase moins dense du flux de la première zone à se déplacer vers le centre;
à décharger axialement la phase moins dense du flux provenant de la première zone et de chaque zone suivante et à introduire le flux déchargé axialement dans la zone immédiatement suivante de sorte que le sens de rotation du flux entrant dans chaque zone soit le même et que les forces centrifuges obtenues amènent une phase plus dense du flux de chaque zone à se déplacer vers l'extérieur et une phase moins dense à se déplacer vers le centre;
à décharger tangentiellement la phase plus dense de chaque zone de sorte que les solides soient séparés du fluide, **caractérisé en ce que** le flux déchargé axialement est introduit tangentiellement dans la zone immédiatement suivante.

2. Procédé selon la revendication 1, dans lequel le flux est retiré centralement de la dernière de la pluralité des zones alignées axialement.

3. Procédé selon la revendication 1 ou 2, dans lequel le flux est envoyé à travers deux zones de séparation cylindriques alignées axialement.

4. Procédé selon l'une quelconque des revendications 1 à 3, dans lequel le fluide est un gaz.

5. Séparateur gaz/solides à plusieurs étages comprenant :
au moins un premier étage et un deuxième étage, chacun ayant une partie de corps principale (14, 22), la partie de corps principale de chaque étage étant de forme générale cylindrique et ayant une première extrémité et une seconde extrémité; la partie de corps principale du premier étage ayant une première extrémité fermée (15) et une ouverture tangentielle près de la première extrémité pour introduire un flux de fluide/solides pour une séparation dans le séparateur et lui communiquer un mouvement tourbillonnaire; un tube de transfert entre étages généralement cylindrique (18) ayant une première extrémité et une seconde extrémité, ledit tube étant situé concentriquement à l'intérieur du corps principal de chaque étage; le tube de transfert entre étages du premier étage étant ouvert à sa première extrémité et sa seconde extrémité étant en communication avec la première extrémité du tube entre étages dans le deuxième étage, le tube de transfert entre étages du deuxième étage étant fermé à sa seconde extrémité et ayant une ouverture périphérique orientée tangentiellement (23) près de la seconde extrémité; et une zone de dégagement de solides concentrique généralement cylindrique (21, 27) entourant chacune des parties de corps principales du premier et du deuxième étages au niveau de leurs secondes extrémités, chaque zone de dégagement présentant une ouverture (12, 28) pour en éliminer les solides; et une sortie de fluide (26) située à la seconde extrémité du séparateur.

6. Séparateur selon la revendication 5, comprenant un troisième étage ayant une partie de corps principale généralement cylindrique (32), le troisième étage ayant un tube de transfert entre étages; le tube de transfert entre étages du troisième étage ayant une première extrémité et une seconde extrémité fermées; la première extrémité du tube de transfert entre étages du troisième étage étant en communication avec le deuxième étage; le troisième étage ayant une ouverture périphérique orientée tangentiellement (37) près de la seconde extrémité; et une zone de dégagement de solides concentrique généralement cylindrique (35) entourant le troisième étage, la zone de dégagement présentant une ouverture (39) pour éliminer les solides du séparateur.

7. Séparateur selon la revendication 5 ou 6, dans lequel les étages se présentent sous la forme d'un appareil unitaire.
